# FASCICULE DE BREVET EUROPEEN

(11) **EP 0 385 040 B1**
(45) Date de publication et mention de la délivrance du brevet: **11.08.1993**
(21) Numéro de dépôt: 89403250.7
(22) Date de dépôt: 24.11.1989
(51) Int. Cl.: B60T 7/20, F16D 51/46

(54) **Dispositif de freinage à inertie pour un véhicule tracté, tel qu'une remorque avec suppression automatique du freinage en marche arrière**
Auflaufbremse für ein gezogenes Fahrzeug, zum Beispiel ein Anhänger mit automatischer Unterdrückung des Bremsens beim Rückwärtsfahren
Overrunning brake for a towed vehicle, e.g. a trailer with automatic suppression of braking during reverse

(30) Priorité: 27.01.1989 FR 8901015
(43) Date de publication de la demande: 05.09.1990
(73) Titulaire: S.A. THIBAULT-ESSIEUX R.T.N., F-49490 Noyant (FR)
(72) Inventeur: Thibault, Jean-Claude, F-49490 Noyant (FR); Thibault, Alain, F-49150 Bauge (FR)
(74) Mandataire: Hud, Robert

(56) Documents cités:
- DE-U- 8 523 004
- FR-A- 2 150 423

## Description

L'invention concerne un dispositif de freinage à inertie pour un véhicule tracté tel qu'une remorque, et plus particulièrement un tel dispositif dans lequel l'action de freinage est automatiquement supprimée lors du déplacement en marche arrière.

On connaît par le document FR-A-2 222 899 des dispositifs de freinage de ce type comprenant, logées à l'intérieur d'un tambour tournant, deux mâchoires de friction en arc de cercle qui s'appuient à une extrémité sur un support fixe et qui sont destinées, lors de l'actionnement d'un dispositif écarteur, à s'écarter vers l'extérieur pour engager le tambour tournant et assurer son immobilisation. L'une de ces mâchoires présente une structure particulière pour pouvoir s'effacer radialement vers l'intérieur, sous l'action du tambour tournant dans le sens de la marche arrière, en supprimant alors l'action de freinage et en permettant le recul de la remorque.

La présente invention concerne également un dispositif utilisant deux mâchoires en arc de cercle conçues pour pouvoir s'écarter vers l'extérieur mais ce dispositif, qui ne prévoit pas de déplacement isolé d'une seule des deux mâchoires et en particulier pas de mouvement d'effacement radial de la mâchoire, est d'une conception et d'un fonctionnement fondamentalement différents de ceux des dispositifs de freinage connus, en permettant une simplification sensible du dispositif, en particulier au niveau de la commande de frein de parcage destinée à lui être associée, ainsi qu'un rendement accru du freinage.

Selon l'invention le dispositif de freinage à inertie pour remorque avec suppression automatique du freinage en marche arrière, comprend deux mâchoires en arc de cercle articulées à une extrémité à une pièce de liaison et coopérant à leur autre extrémité avec un dispositif écarteur, l'actionnement du dispositif écarteur au moyen d'un câble relié à la tige du dispositif à inertie assurant l'écartement des mâchoires contre l'action de ressorts pour engager le tambour de roue par l'intermédiaire de garnitures de friction portées par les mâchoires, l'une desdites mâchoires subissant sous l'action du tambour tournant dans le sens de la marche arrière un déplacement supprimant l'action de freinage. Il se caractérise en ce que ladite pièce de liaison est montée pour coulisser librement dans un support fixe, et en ce que le dispositif écarteur s'appuie sur ladite mâchoire au moyen d'une pièce intermédiaire coopérant d'une part avec le dispositif écarteur et articulée d'autre part à ladite mâchoire, une butée fixe disposée entre les deux mâchoires limitant, lors de l'actionnement du dispositif écarteur, le déplacement de rotation de l'ensemble constitué par les deux mâchoires, la pièce de liaison, la pièce intermédiaire et le dispositif écarteur par friction sur le tambour de roue.

Lorsque, le tambour de roue tournant dans le sens de la marche avant, un actionnement du dispositif écarteur provoque un écartement des deux mâchoires qui étaient préalablement au repos, la friction sur ledit tambour des garnitures portées par les mâchoires provoque une rotation dans le même sens que le tambour de l'ensemble formé par les deux mâchoires, la pièce intermédiaire, l'écarteur et la pièce de liaison, jusqu'à ce que ladite pièce intermédiaire vienne en appui contre une butée fixe. L'autre mâchoire se trouve alors en position écartée et assure le freinage. On constate toutefois qu'étant donné le déplacement réalisé, les deux mâchoires engagent en fait le tambour ce qui assure un freinage très efficace.

Lorsque le tambour de roue tourne dans le sens de la marche arrière et que le dispositif écarteur est actionné, par le système à inertie, l'ensemble constitué par les deux mâchoires, la pièce intermédiaire, la pièce de liaison et le dispositif écarteur se déplace en bloc dans ce sens de rotation jusqu'à ce que la mâchoire non associée à la pièce intermédiaire engage la butée fixe. La face arrière de la pièce intermédiaire ne s'appuyant plus sur la butée fixe, cette pièce intermédiaire peut alors pivoter par rapport à la mâchoire associée en augmentant la course du dispositif écarteur et en réduisant donc l'écartement de ladite mâchoire associée qui n'interdit plus alors la rotation du tambour de roue en marche arrière.

A l'arrêt, l'actionnement du levier du frein de parcage provoque une traction maximum sur le dispositif écarteur qui entraîne le pivotement de la pièce intermédiaire jusqu'à ce que celle-ci engage la mâchoire qui lui est associée. L'écartement de cette mâchoire est alors assuré et le freinage est réalisé, quel que soit le sens de rotation du tambour de roue.

Pour bien faire comprendre le dispositif selon l'invention on en décrira ci-après, à titre d'exemple sans caractère limitatif, une forme d'exécution préférée en référence au dessin schématique annexé dans lequel :
la figure 1 est une vue en coupe longitudinale d'un dispositif de freinage selon l'invention, en position de freinage d'une roue tournant en marche avant
la figure 2 est une vue du dispositif de la figure 1, dans la position où la roue à freiner tourne dans le sens de la marche arrière ; et

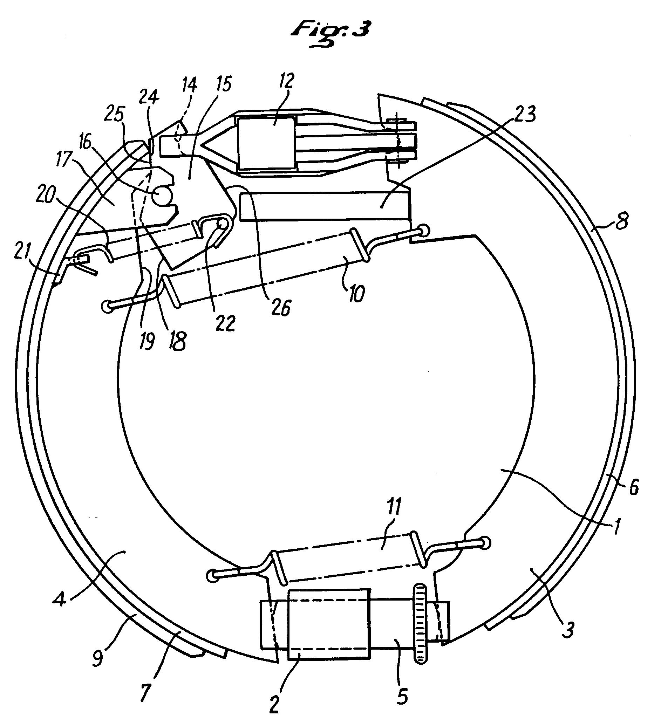

la figure 3 est une vue du dispositif des figures 1 et 2, dans la position d'actionnement du frein de parcage.

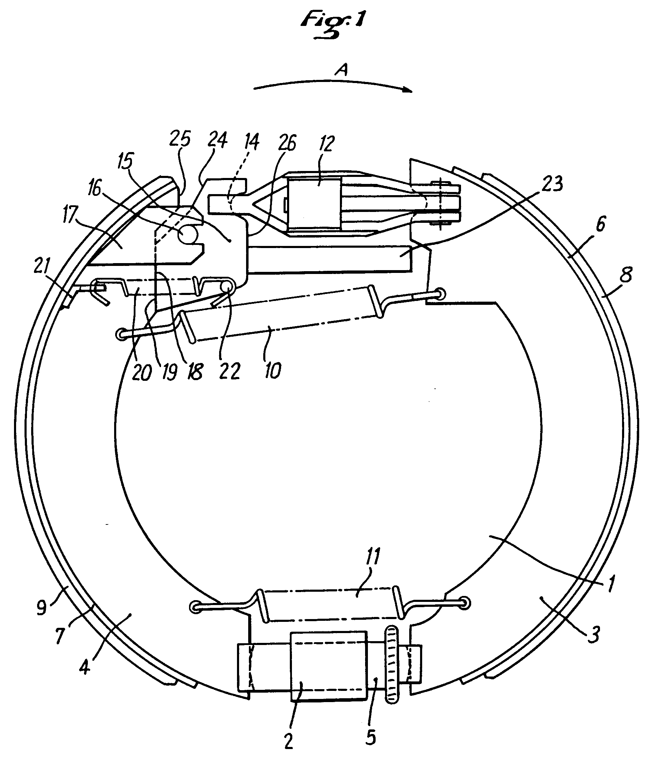

En référence à la figure 1 on a représenté un dispositif de freinage selon l'invention destiné à équiper le moyeu de roue d'une remorque comprenant un système de freinage par inertie. Le dispositif de freinage comprend une plaque d'appui annulaire 1 sur laquelle est monté un support 2 en forme de manchon. Deux mâchoires arquées 3, 4, se faisant face, sont montées sur la plaque 1 en ayant chacune une extrémité solidaire d'une pièce de liaison 5 montée coulissante à l'intérieur du support 2. A leurs extrémités opposées les mâchoires 3, 4, coopèrent avec un dispositif d'écartement, qui sera décrit plus loin.

Chaque mâchoire 3, 4 est constituée en un seul élément comprenant une partie plate arquée dont le bord extérieur est solidaire d'une plaque arquée respectivement 6, 7 d'orientation perpendiculaire, laquelle porte une garniture de friction 8, 9. Des ressorts de traction 10, 11 relient ensemble les mâchoires 3 et 4 en s'opposant à leur écartement.

Le dispositif écarteur de type conventionnel, représenté en 12, a une extrémité engagée dans une encoche de la mâchoire 3 et est actionné à partir d'un câble de frein (non représenté) relié de façon connue au dispositif de commande à inertie de la remorque et au levier de frein de stationnement. L'extrémité opposée du dispositif écarteur 12 s'engage dans l'encoche 14 d'une pièce intermédiaire 15 qui est elle-même articulée, autour d'un axe 16, à un prolongement 17 de la mâchoire 4. Sur sa face avant la pièce intermédiaire 15 présente une partie plane 18 conçue pour pouvoir engager une partie correspondante 19 de la mâchoire 4. Un ressort de traction 20 relie une chape 21 de la mâchoire 4 à un téton 22 porté par la partie inférieure de la pièce 15.

A sa partie supérieure la plaque annulaire 1 porte une butée fixe 23 dont les extrémités sont destinées à être engagées l'une par la mâchoire 3 et l'autre par la face arrière plane 26 de la pièce intermédiaire 15.

A la figure 1 on a supposé que le tambour de roue associé au dispositif tourne dans le sens de la marche avant (sens de la flèche A) et on comprend que, lors du freinage, les mâchoires 3, 4 s'écartent sous l'action de l'écarteur et viennent engager le tambour. L'action de friction du tambour sur les garnitures 8, 9 entraîne un déplacement en bloc, dans le sens de la flèche A, de l'ensemble constitué par la mâchoire 4, la pièce intermédiaire 15, l'écarteur 12, la mâchoire 3 et la pièce de liaison 5 (qui est montée flottante à l'intérieur du support 2), jusqu'à ce que la mâchoire 4 vienne engager la butée 23 par l'intermédiaire de la face arrière 26 de la pièce 15. Dans cette position, la pièce 15 est bloquée entre la butée 23 et la mâchoire 4 (dont la partie 19 engage la partie 18 de la face avant de la pièce 15) et ne peut donc pivoter. La mâchoire 3, écartée de la butée 23, procure alors une action de freinage efficace. De plus, en raison du déplacement de l'ensemble, la mâchoire 4 engage également le tambour de roue en augmentant le rendement du freinage.

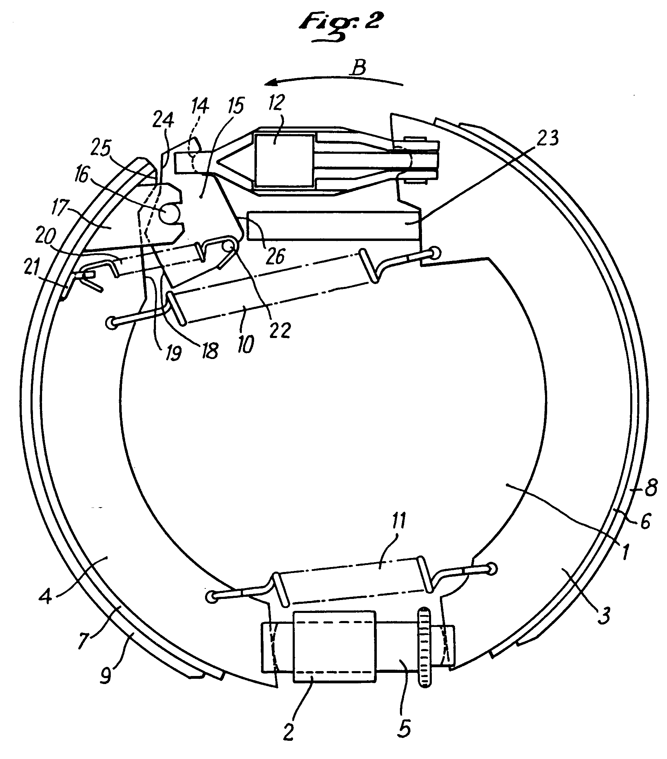

En référence maintenant à la figure 2, on a supposé que la roue de la remorque se déplace dans le sens de la marche arrière (sens de la flèche B). Lors du freinage, les mâchoires 3, 4 s'écartent sous l'action de l'écarteur 12 et viennent frotter sur le tambour. Par friction l'ensemble constitué par la mâchoire 3, l'écarteur 12, la pièce 15, la mâchoire 4 et la pièce de réglage 5 est déplacé en rotation dans le sens de la flèche B jusqu'à ce que la mâchoire 3 engage la butée 23. La pièce intermédiaire 15, dont la face arrière 26 est libérée, peut alors pivoter dans le sens anti-horaire sous l'effet de la force qui lui est appliquée par l'écarteur 12, ce qui augmente la course de cet écarteur et réduit donc l'écartement de la mâchoire 4 en permettant la rotation en marche arrière de la roue. Lors de cette rotation les mâchoires 3, 4 frottent légèrement sur le tambour, sous l'action du ressort 20, sans que cela présente d'inconvénients particuliers.

Pour le parcage, on actionne le levier de frein à main (non représenté) de façon que le câble de frein tire au maximum sur l'écarteur 12. Cette action provoque le pivotement de la pièce intermédiaire 15 dans le sens anti-horaire jusqu'à ce qu'elle vienne engager par la partie oblique supérieure 24 de sa face avant la partie de profil correspondant 25 de la mâchoire 4. Cette position de butée une fois atteinte, l'actionnement de l'écarteur 12 assure l'écartement des deux mâchoires et l'immobilisation du tambour dans les deux sens de rotation. On remarque que le dispositif selon l'invention, qui n'utilise pas une garniture s'effaçant vers l'intérieur en marche arrière, rend inutile l'emploi du dispositif accumulateur d'énergie nécessaire dans le cas des freins connus.

Comme indiqué ci-avant et comme on l'a représenté au dessin, la pièce intermédiaire 15 présente une forme bien définie avec du côté de sa face avant, une partie plane 18, destinée à engager la mâchoire 4, et une partie oblique en retrait 24 engageant une partie 25 de la mâchoire 4 lors de l'actionnement du frein de parcage, et du côté de sa face arrière un bord plan 26 engageant la butée fixe 23.

On notera que, avantageusement, la pièce de liaison 5 comprend un système de réglage des mâchoires 3, 4.

## Revendications

1. Dispositif de freinage à inertie pour remorque avec suppression automatique du freinage en marche arrière, comprenant deux mâchoires (3, 4) en arc de cercle articulées à une extrémité à une pièce de liaison (5) et coopérant à leur autre extrémité avec un dispositif écarteur (12), l'actionnement du dispositif écarteur (12) au moyen d'un câble relié à la tige du dispositif à inertie assurant l'écartement des mâchoires (3, 4) contre l'action de ressorts (10, 11) pour engager le tambour de roue par l'intermédiaire de garnitures de friction (8, 9) portées par les mâchoires, l'une (4) desdites mâchoires subissant, sous l'action du tambour tournant dans le sens de la marche arrière, un déplacement supprimant l'action de freinage, caractérisé en ce que ladite pièce de liaison (5) est montée pour coulisser librement dans un support fixe (2), et en ce que le dispositif écarteur (12) s'appuie sur ladite mâchoire (4) au moyen d'une pièce intermédiaire (15) coopérant d'une part avec le dispositif écarteur (12) et articulée d'autre part à ladite mâchoire (4), une butée fixe (23) disposée entre les deux mâchoires limitant, lors de l'actionnement du dispositif écarteur, le déplacement de rotation de l'ensemble constitué par les deux mâchoires (3, 4), la pièce de liaison (5), la pièce intermédiaire (15) et le dispositif écarteur (12) par friction sur le tambour de roue.

2. Dispositif selon la revendication 1, caractérisé en ce que ladite pièce intermédiaire présente vers l'arrière une partie (26) destinée à engager la butée fixe (23) et, vers l'avant, des première (18) et seconde (24) parties conçues pour coopérer respectivement avec des première (19) et seconde (25) parties de la mâchoire associée (4).

3. Dispositif selon la revendication 2, caractérisé par un ressort (20) disposé entre la pièce intermédiaire (15) et la mâchoire (4) qui lui est associée et tendant à amener en contact mutuel lesdites premières parties (18, 19) de la face avant de la pièce intermédiaire (15) et de la mâchoire associée (4).

4. Dispositif selon l'une quelconque des revendications 2 et 3 caractérisé par le fait que, lors de la rotation du tambour de roue dans le sens de la marche avant et actionnement du dispositif écarteur (12), la face arrière (26) de la pièce intermédiaire (15) engage la butée fixe (23) alors que la première partie (18) de sa face opposée engage la première partie (19) de la mâchoire associée (4), l'autre mâchoire (3) étant écartée de la butée fixe (23) et agissant pour freiner le tambour de roue, alors que ladite mâchoire associée (4) engage aussi le tambour de roue.

5. Dispositif selon l'une quelconque des revendications 2 et 3 caractérisé en ce que, lors de la rotation du tambour de roue dans le sens de la marche arrière et actionnement du dispositif écarteur (12), la mâchoire (3) non associée à la pièce intermédiaire (15) engage la butée fixe (23), alors que la pièce intermédiaire (15) dont la face arrière (26) n'engage plus la butée fixe (23) pivote par rapport à sa mâchoire associée (4) en augmentant la course de l'écarteur (12) et en réduisant donc l'écartement de la mâchoire (4) pour permettre la rotation du tambour de roue dans le sens de la marche arrière.

6. Dispositif selon l'une quelconque des revendications 2 et 3 caractérisé en ce que, en position de frein de parcage, l'actionnement supplémentaire de l'écarteur (12) provoque une rotation de la pièce intermédiaire (15) telle que la seconde partie (24) de la face avant de celle-ci engage la seconde partie (25) de la mâchoire associée (4).

7. Dispositif selon l'une quelconque des revendications précédentes, caractérisé en ce que ladite pièce de liaison (5), qui coulisse dans le support fixe (2), permet un réglage de l'écartement des mâchoires.

## Claims

1. Inertia braking device for a trailer in which braking is automatically suppressed in reverse, comprising two arcuate shoes (3, 4) articulated at one end to a connection member (5) and cooperating at their other end with a spacer device (12), the activation of the spacer device (12) by means of a cable connected to the rod of the inertia device moving the shoes (3, 4) apart against the action of springs (10, 11) so as to engage the brake drum by means of friction linings (8, 9) carried by the shoes, one (4) of the said shoes performing a movement which suppresses the braking action under the effect of the drum rotating in the direction of reverse travel, characterized in that the said connection member (5) is mounted so as to slide freely in a fixed mounting (2); and in that the spacer device (12) bears on the said shoe (4) by means of an intermediate part (15) which firstly cooperates with the spacer device (12) and secondly is articulated on the said shoe (4), a fixed stop (23) disposed between the two shoes limiting the rotational movement of the assembly formed by the two shoes (3, 4), the connection member (5), the intermediate part (15) and the spacer device (12) by friction on the brake drum when the spacer device is activated.

2. Device according to Claim 1, characterized in that the said intermediate part has at the rear a part (26) for engaging the fixed stop (23) and at the front first (18) and second (24) parts designed to cooperate respectively with the first (19) and second (25) parts of the associated shoe (4).

3. Device according to Claim 2, characterized by a spring (20) which is disposed between the intermediate part (15) and the shoe (4) associated therewith, and which tends to bring the said first parts (18, 19) of the front face of the intermediate part (15) and of the associated shoe (4) into contact with one another.

4. Device according to either of Claims 2 and 3, characterized in that, when the brake drum rotates in the direction of forward travel and the spacer device (12) is activated, the rear face (26) of the intermediate part (15) engages the fixed stop (23) whilst the first part (18) of its opposite face engages the first part (19) of the associated shoe (4), the other shoe (3) being moved away from the fixed stop (23) and having the effect of braking the brake drum, whilst the said associated shoe (4) also engages the brake drum.

5. Device according to either of Claims 2 and 3, characterized in that, when the brake drum rotates in the direction of reverse travel and the spacer device (12) is activated, the shoe (3) not associated with the intermediate part (15) engages the fixed stop (23) whilst the intermediate part (15), of which the rear face (26) no longer engages the fixed stop (23), pivots relative to its associated shoe (4), increasing the travel of the spacer device (12) and thus reducing the movement of the shoe (4) so as to enable the brake drum to rotate in the direction of reverse travel.

6. Device according to either of Claims 2 and 3, characterized in that, in the parking brake position, the additional activating of the spacer device (12) causes the intermediate part (15) to rotate such that the second part (24) of the front face thereof engages the second part (25) of the associated shoe (4).

7. Device according to any one of the preceding Claims, characterized in that the said connection member (5), which slides in the fixed mounting (2), enables the movement of the shoes to be adjusted.

## Patentansprüche

1. Auflaufbremse für ein gezogenes Fahrzeug, zum Beispiel einen Anhänger mit automatischer Bremsunterdrückung bei Rückwärtsfahrt, welche zwei kreisbogenförmige Bremsklötze (3, 4) aufweist, die an einem Ende an einem Verbindungselement (5) angelenkt sind und mit ihrem anderen Ende mit einer Abspreizeinrichtung (12) zusammenwirken, wobei die Betätigung der Abspreizeinrichtung (12) mit Hilfe eines mit dem Schaft der Auflaufvorrichtung verbundenen Seil das Abspreizen der Bremsklötze (3, 4) entgegen der Wirkung von Federn (10, 11) gewährleistet, um mit der Radtrommel über Bremsbeläge (8, 9) auf den Bremsklötzen in Eingriff zu gelangen, wobei einer (4) der Bremsklötze unter der Einwirkung der sich in Rückwärtsfahrtrichtung drehenden Radtrommel eine Verlagerung erfährt, wodurch die Bremswirkung unterdrückt wird, **dadurch gekennzeichnet**, daß das Verbindungselement (5) so angeordnet ist, daß es frei in einem feststehenden Aufnahme (2) gleiten kann, und daß die Abspreizeinrichtung (12) sich auf dem Bremsklotz (4) mittels eines Zwischenstücks (15) abstützt, welches einerseits mit der Abspreizeinrichtung (12) zusammenwirkt und andererseits an dem Bremsklotz (4) angelenkt ist, wobei ein zwischen den beiden Bremsklötzen angeordneter feststehender Anschlag (23) bei Betätigung der Abspreizeinrichtung die Verstellung der Drehbewegung der gesamten Anordnung, die aus den beiden Bremsklötzen (3, 4), dem Verbindungselement (5), dem Zwischenstück (15) und der Abspreizeinrichtung (12) besteht, durch Reibung auf der Radtrommel begrenzt.

2. Auflaufbremse nach Anspruch 1, **dadurch gekennzeichnet**, daß das Zwischenstück zum rückwärtigen Teil hin einen Abschnitt (26) aufweist, der für den Eingriff mit dem feststehenden Anschlag (23) vorgesehen ist, sowie zum vorderen Teil zu einen ersten (18) und einen zweiten (24) Abschnitt, wobei diese beiden Abschnitte jeweils zum Zusammenwirken mit einem ersten (19) und einem zweiten (25) Abschnitt des zugehörigen Bremsklotzes (4) vorgesehen sind.

3. Auflaufbremse nach Anspruch 2, **gekennzeichnet durch** eine zwischen dem Zwischenstück (15) und dem diesem zugeordneten Bremsklotz (4) angeordnet Feder (20), welche die ersten Abschnitte (18, 10) auf der Vorderseite des Zwischenstücks (15) und des zugeordneten Bremsklotzes (4) in gegenseitige Berührung spannt.

4. Auflaufbremse nach einem der Ansprüche 2 und 3, **dadurch gekennzeichnet,** daß bei Drehung der Radtommel in Vorwärtsfahrtrichtung und bei Betätigung der Abspreizeinrichtung (12) die rückwärtige Fläche (26) des Zwischenstücks (15) mit dem feststehenden Anschlag (23) in Eingriff steht, während der erste Abschnitt (18) auf der gegenüberliegenden Fläche mit dem ersten Abschnitt (19) des zugeordneten Bremsklotzes (4) in Eingriff steht, wobei der andere Bremsklotz (3) vom feststehenden Anschlag (23) abgehoben und so wirksam ist, daß die Radtrommel abgebremst wird, während der zugeordnete Bremsklotz (4) ebenfalls mit der Radtrommel in Eingriff steht.

5. Auflaufbremse nach einem der Ansprüche 2 und 3, **dadurch gekennzeichnet**, daß bei Drehung der Radtrommel in Rückwärtsfahrtrichtung und bei Betätigung der Abspreizeinrichtung (12) der dem Zwischenstück (15) nicht zugeordnete Bremsklotz (3) mit dem feststehenden Anschlag (23) in Eingriff steht, während das Zwischenstück (15), dessen Rückseite (26) nicht mehr mit dem feststehenden Anschlag (23) in Eingriff steht, gegenüber dem zugeordneten Bremsklotz (4) verschwenkt wird und dabei den Weg der Abspreizeinrichtung (12) vergrößert und damit den Abspreizabstand des Bremsklotzes (4) verringert, so daß die Drehung der Radtrommel in Rückwärtsfahrtrichtung möglich ist.

6. Auflaufbremse nach einem der Ansprüche 2 und 3, **dadurch gekennzeichnet**, daß in Parkbremsstellung die zusätzliche Betätigung der Abspreizeinrichtung (12) eine Drehbewegung des Zwischenstücks (15) in der Weise bewirkt, daß der zweite Abschnitt (24) auf dessen Vorderseite mit dem zweiten Abschnitt (25) des zugehörigen Bremsklotzes (4) in Eingriff steht.

7. Auflaufbremse nach einem der vorhergehenden Ansprüche, **dadurch gekennzeichnet**, daß das Verbindungselement (5), das im feststehenden Aufnahmeteil (2) gleitend angeordnet ist, ein Einstellen der Abspreizung der Bremsklötze gestattet.
